# EUROPEAN PATENT APPLICATION

(11) **EP 1 280 035 A1**
(43) Date of publication of application: **29.01.2003**
(21) Application number: 01202865.0
(22) Date of filing: 26.07.2001
(51) Int. Cl.: G06F 1/00

(54) **Identity verification for use with interconnected devices**

(71) Applicant: Irdeto Access B.V., 2132 HD Hoofddorp (NL)
(72) Inventor: Dekker, Gerard Johan, 2151 EB Nieuw-Vennep (NL)
(74) Representative: de Vries, Johannes Hendrik Fokke

(57) **Abstract**

In a method for verifying the identity of a user of a first device (1) connected to a second device (2) through a data link (3), the user is provided with a user-specific password (8). The method comprises transmitting user-specific data from the first device (1) to the second device (2) and comparing at least part of the data with data on the second device (2). The password data size exceeds the amount of data that the data link (3) is capable of transferring within a pre-determined interval of time. The user-specific data transmitted from the first device (1) to the second device (2) comprises one or more subsections (9,10) of the user-specific password (8) provided to the user. A system comprising a first device (1) connected to a second device (2) through a data link (3) employs such a method. Computer programs allow programmable processing devices to function as the first(1) or second device (2).

## Description

### Background of the invention

The invention relates to a method for verifying the identity of a user of a first device connected to a second device through a data link, wherein the user is provided with a user-specific password, the method comprising transmitting user-specific data from the first device to the second device and comparing at least part of the data with reference data.

Such methods are used, for example, to verify the identity of a subscriber to a pay TV system or that of a visitor to a web-site with restricted access. In these cases, it is necessary to verify the identity of the subscriber or visitor. Only those subscribers who have paid to receive a certain broadcast signal should be enabled to do so. Likewise, only computer users with access privileges for the web-site should be allowed to visit the site.

A common technique for identifying a user of a device in a network, is to challenge him to provide a password. The organisation behind the second device compares the password received from the user with a copy, kept in its records, to verify his identity.

Such a system relies on the good will of the user. If the user decides to make his password available to a third party without authorisation, this third party could assume the identity of the user of the first device.

Networks like the internet afford a relatively easy way to make data available to large sections of the general public. In this way, a malicious user of a device in a network could make his password available to a large number of people, making the system relying on this password insecure.

One way around this problem is to provide users with changing passwords. Each request for authentication requires the user to provide a different password. Such a method can, however, be cumbersome and/or time-consuming, since the password has to be generated or selected from a list.

### Summary of the invention

The method according to the invention prevents unauthorised sharing of passwords. The method is characterised in that the password data size exceeds the amount of data that the data link is capable of transferring within a pre-determined interval of time. The said interval of time is chosen to be extremely long, thus making sharing of the password, e.g. by copying to a memory medium or by transmission across networks like the internet, an unattractive prospect.

The use of very long passwords provides extra security to a system. In order to prevent long verification procedures when using the method of the invention, the user-specific data transmitted from the first device to the second device comprises one or more subsections of the user-specific password provided to the user. In this manner, verification of the identity of the user does not require transmission of the entire password. This makes the verification procedure quicker and less cumbersome.

The second device can transmit a request for certain sections of the password to the first device. In an advantageous embodiment of a method according to the invention, these parts are selected at random. This provides security against eavesdroppers. A tap on the communication between first and second device will not reveal sufficient information to enable the eavesdropper to subsequently impersonate the user of the first device.

The entire password can be provided to the user of the first device on a data carrier, for example a CD or DVD. The data carrier can be copy-protected using a standard method.

### Brief description of the drawings

The invention will now be explained in further detail, with reference to the drawings, in which
Fig.1 shows a schematic diagram of an example of a system in which a method according to the invention is implemented,
Fig.2 shows a step in the method according to the invention, wherein the user-specific password is generated,
Fig.3 shows a schematic flow chart, embodying an example of the method according to the present invention, which shows some of the important steps that take place in the second device, during verification of the identity of a user of the first device.

### Brief description of the preferred embodiment

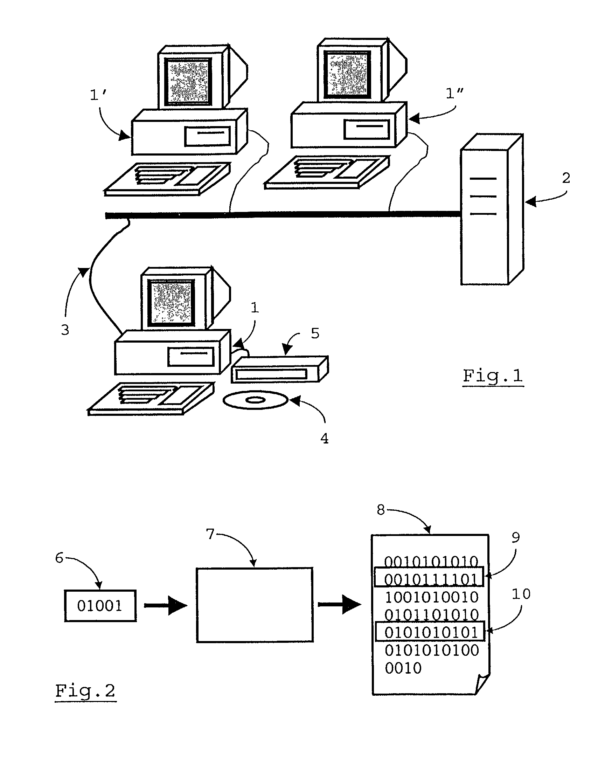

Fig.1 depicts a computer network in which a method according to the invention is employed. A first device 1, a computer in the network in this case, is linked, directly or indirectly, to a second device 2, so that data can be transferred from the one to the other. In this particular embodiment the second device 2 is a server. The first device 1 is connected to the second device 2 through a data link 3. The data link 3 can be a network, like a Local Area Network, a dial-up connection, or an internet connection.

A user of the first device 1 wishes to log on, for example to retrieve files from the second device or from other connected devices in the network. A password has been made available to the user, comprising a very long bit string. This password is unique to the user. In addition, some way of linking the user to the password is used. This could be a code in a part of the very long bit string, or a user name or an identification of the computer 1.

In the particular embodiment of Fig. 1, the password has been made available to the user on a data carrier 4 in the shape of a CD. Any other type of data carrier could also have been used. When the first device 1 is a computer, the data carrier 4 could be a floppy disk, a DVD or a magnetic tape, for instance. Linked to, or part of, the first device 1 are some means 5 for reading the password. In fig. 1, this is a CD player, but it could also be a DVD-player or some other device suited to reading the contents of the data carrier 4.

To prevent a user from making a direct copy of the data carrier 4, it is copy-protected. The protection technique could, for instance comprise including bad sectors on the CD 4. Most CD writers cannot cope with data from corrupt sectors. The second device 2 could keep a record of the bad sectors. A request for a section of the password that should have been contained in one of the bad sectors is thus avoided.

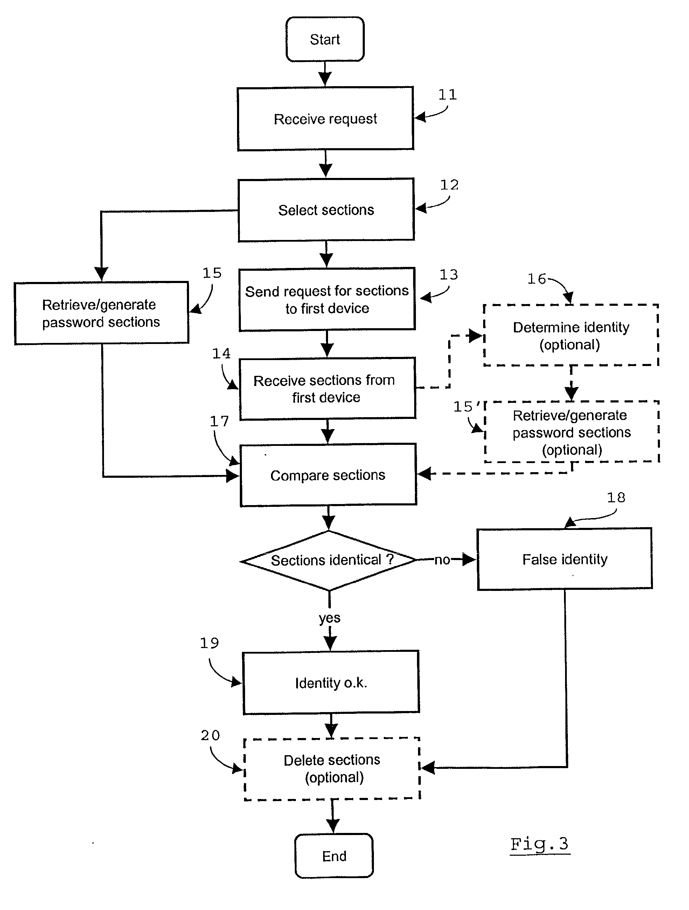

Fig. 2 schematically illustrates the creation of the password in a preferred embodiment of the invention. A seed 6, unique to the user, is fed to a password generator 7. The password generator 7 is preferably a random number generator. However, it is conceivable that the password generator 7 uses some other algorithm. The password generator 7 generates a user-specific password 8, comprising a very large bit string. Subsections 9,10 of the user-specific password 8 can be selected for transmission from the first device 1 to the second device 2 in a step in the method according to the invention.

The password length, and hence its data size, has been determined by its issuer before setting up the system. To determine the length of the password 8, at least two criteria are important.

In the system of Fig. 1 a first criterion is the capacity of the data link 3. In other systems, the capacity of the fastest data link in general to a typical computer in the network would be a good criterion. If the computer is connected to the internet, then the speed of the internet link would be the decisive criterion. A primary aspect of the present invention is prevention of the spread of passwords through the internet, since this way of spreading has the potential to cause severe damage. The password data size is chosen to exceed the amount of data that the data link 3 is capable of transferring within a certain interval of time. This certain interval of time is chosen to be large enough to deter users from sharing passwords. In a self-contained network, like that of Fig. 1, this could be a matter of hours. If the computers are capable of connection to the internet, a longer interval could be chosen, e.g. 10-12 hours. In any case, the time interval should be long enough to make downloading the password 8 in its entirety extremely unattractive.

A secondary criterion is the storage capacity of the data carrier 4 on which the password 8 has been made available to the user. In the case of the CD-ROM, 640 Mb would be about the maximum. It is advantageous to exploit the entire capacity of the carrier 4 to provide the highest level of security. The method does not impose an upper limit on the length of the bit string.

Why this is so, will become clear upon inspection of Fig. 3 in which a schematic flow chart of an embodiment of the method of the invention is depicted. The figure shows some of the important steps that take place in the second device 2, when verifying the identity of a user of the first device 1, for example a user of the computer 1 in fig. 1.

After the data carrier 4 has been inserted into the CD-player, the means 5 for reading the password, the first device 1 transmits a logon request, which is received by the second device 2 in a first step 11. This request is either entered by the user, possibly using a helper program, or it can be automatically generated by a helper program upon insertion of the CD or data carrier 4 into a reader connected to the first device 1. The logon request can provide the second device 2 with information regarding the identity of the user or of the first device 1, so that the user can be linked to the password 8.

Alternatively, the selected subsections 9,10 of the password 8 transmitted from the first device 1 could comprise a way of identifying the user. In the latter case, one or more of the subsections 8,9 of the password comprises an identification code, identifying the user. The second device 2 could then retrieve this code from the relevant section, using it to link the user to the correct reference data.

As the password 8 is too long to transfer through the data link 3 within any reasonable interval of time, the selected subsections 9,10 of the password 8 transmitted by the first device 1 to the second device 2 will be smaller in size. The total data size of the selected subsections 9,10 can be set beforehand. Preferably, it is chosen to make the entire verification procedure as short as possible, whilst still maintaining an adequate level of security, as outlined above in the discussion of fig. 1.

In a preferred embodiment, the second device 2 selects different subsections 9,10 each time the identity of the user must be verified, in a second step 12. Since every session uses different subsections 9,10 of the password 8, capturing the subsections 9,10 transmitted during one session is pointless. Eavesdroppers 1', 1" on the data link 3 can still not impersonate the user in a subsequent session. To increase the level of security even further, the second device 2 can select the subsections 9,10 to be transmitted at random.

In a separate embodiment of the method according to the invention, useable in cases where password sharing is less of a problem, this aspect allows the use of a shorter password. Since different subsections are selected each time the identity of the user needs to be verified, the eavesdroppers 1',1" would still need to listen in to a large number of exchanges between the first device 1 and the second device 2 to determine the entire password. Therefore, this aspect of the invention enhances the security provided by any method of identity verification using a password, regardless of how long the password is.

An alternative embodiment of the method is possible, wherein the user of the first device 1 requests to be logged on by merely transmitting selected parts of the password 8. This would provide a larger ease of use to the user, since he need only insert the data carrier 4 into the means for reading the password 5 to start the identity verification procedure. A helper program on the first device 1 takes care of all further communication with the second device 2.

When the logon request has not actively been created by the user, the request received in the first step 11 would then also include an indication of his identity. In this case, the step 12 just described can be omitted, unless a further exchange of subsections 9,10 of the password 8 is desirable. In such an embodiment of the method, the subsections 9,10 to be sent are pre-determined, for example because the same subsections 9,10 are always sent, or because they are selected according to some algorithm available to the first device 1 or its user.

In a next step 13, after the subsections 9,10 to be requested have been selected in step 12, a request for these particular sections 9,10 is sent to the first device 1. The first device 1 then looks up these sections 9,10 of the password 8 and transmits them to the second device 2. In the above-mentioned alternative embodiment of the method, wherein the request from the first device 1 comprises password sections, this step 13 can be left out.

The subsequent step 14 is a feature of the method common to all conceivable embodiments. In this step 14, the second device 2 receives subsections 9,10 of the password 8 from the first device 1.

The received sections must now be compared with reference sections. In a step 15, 15' also comprised by all embodiments of the invention, the second device 2 retrieves or generates the reference sections. In the preferred embodiment of the invention, the second device 2 does not keep a full copy of the password 8, to be retrieved for comparison. Rather, the password 8 or the selected subsections 9,10 are generated in each session and deleted afterwards to save storage space. To generate the necessary subsections 9,10 of the password 8, the information identifying the user is used. The information could, for instance, be used to retrieve a separately stored user-specific seed 6 for the password generator 7. Alternatively, the information could comprise the user-specific seed 6.

In an alternative embodiment wherein the user's identity is comprised in the password sections received from the first device 1, the step 15' of retrieving or generating password sections for comparison is preceded by an extra step 16. This step 16 comprises determining the identity of the user of the first device 1. The identity is needed to compare the received sections with the correct reference sections.

Common to all embodiments of the invention are the subsequent steps 17, 18, 19, in which the sections 9,10 of the password 8 received from the first device 1 are compared with the reference sections, and the user's identity is determined as false, in one step 18, or authenticated in the other step 19, depending on the result.

If the reference sections of the password 8 are generated anew by the second device 2 each time the method is executed, then the method comprises an additional step 20 of deleting these reference sections. This saves storage space on the second device 2. It also makes it impossible for someone to look up the password 8 or sections of it on the second device 2.

Those skilled in the art will realise that the invention is not restricted to the embodiments described above which can be varied in a number of ways within the scope of the claims. For instance, the password can be provided to the user in some other way than by means of a data carrier. Also, a data carrier containing the password can be copy-protected through a number of different techniques.

## Claims

1. Method for verifying the identity of a user of a first device (1) connected to a second device (2) through a data link (3), wherein the user is provided with a user-specific password (8), the method comprising transmitting user-specific data (9,10) from the first device (1) to the second device (2) and comparing at least part of the data (9,10) with reference data, **characterised in that** the password data size exceeds the amount of data that the data link (3) is capable of transferring within a pre-determined interval of time.

2. Method according to the preamble of claim 1, **characterised in that** the user-specific data transmitted from the first device (1) to the second device (2) comprises one or more subsections (9,10) of the user-specific password (8) provided to the user.

3. Method according to claim 1 or 2, wherein the second device (2) transmits a request for certain sections (9,10) of the password (8) to the first device (1).

4. Method according to claim 3, wherein the requested sections are chosen at random.

5. Method according to claim 3 or 4, wherein the requested sections (9,10) are composed from the password (8) by the first device (1) in response to the request from the second device (2).

6. Method according to any of claims 1-5, wherein the password (8) or the sections (9,10) of the password (8) are generated as reference data, using a user-specific piece of information (6).

7. Method according to claim 6, wherein the user-specific data (9,10) comprises the user-specific piece of information (6).

8. Method according to any one of the preceding claims, wherein the password (8) is provided to the user of the first device (1) on a data carrier (4), e.g. a CD or DVD.

9. Method according to claim 7, wherein the data carrier (4) storing the password (8) is protected against copying.

10. Method according to claim 9 wherein protecting the data carrier comprises making parts of the data carrier (4) unreadable, and wherein the second device (2) retains a record of unreadable sections of the password (8).

11. Method according to any of the preceding claims, wherein a request for authorisation is sent from the first device (1) to the second device (2), whereupon the reference data, comprising at least part of the user-specific password (8), is generated.

12. System comprising a first device (1) connected to a second device (2) through a data link (3), **characterised in that** the system employs a method according to any one of the preceding claims.

13. System according to claim 12, further comprising means 5 for reading the password 8, connected to the first device 1, wherein the first device 1 comprises means for automatically starting use of the method upon reading the password 8.

14. First device in a system according to claim 12 or 13.

15. Second device in a system according to claim 12 or 13.

16. Computer program capable of running on a computer so that the system comprising the computer program and the computer functions as the first (1) or second device (2) in a system according to claim 11 or 12.
